# EUROPÄISCHE PATENTANMELDUNG

(11) **EP 2 393 059 A1**
(43) Veröffentlichungstag der Anmeldung: **07.12.2011**
(21) Anmeldenummer: 11168668.9
(22) Anmeldetag: 03.06.2011
(51) Int. Cl.: G06Q 30/00

(54) **Verfahren zur Ausgabe und zum Einlösen eines elektronischen Coupons**

(30) Priorität: 04.06.2010 DE 102010029718
(71) Anmelder: acardo technologies AG, 44269 Dortmund (DE)
(72) Erfinder: Thye, Christoph, 44269 Dortmund (DE); Rack, Constantin, 58097 Hagen (DE)
(74) Vertreter: Patentanwälte Freischem

(57) **Zusammenfassung**

Die Erfindung betrifft ein Verfahren zur Ausgabe und zum Einlösen eines elektronischen Coupons mit folgenden Schritten:
• Erzeugen eines elektronischen Coupons durch einen zentralen Server, wobei der Coupon mindestens eine Angabe über einen gewährten Rabatt oder über ein Guthaben sowie eine oder mehrere Bedingungen enthält;
• Zuordnen des Coupons zu einem Kunden-Identifikator,
• Übertragen einer Coupon-Anfrage, welche mindestens einen Kunden-Identifikator umfasst, von einem Point-of-Sale-Computer über ein Datennetzwerk an den zentralen Server,
• Übertragen der Coupondaten vom zentralen Server über ein Datennetzwerk auf den Point-of-Sale-Computer.

Aufgabe der vorliegenden Erfindung ist es, die Transaktionsdauer für das Einlösen und die Ausgabe von personalisierten Coupons zu reduzieren. Diese Aufgabe wird dadurch gelöst, dass
• für mehrere Coupons die vollständigen Coupondaten mit einem zugeordneten Coupon-Identifikator vor dem Kassiervorgang von dem zentralen Server auf den Point-of-Sale-Computer übertragen und in einem lokalen Datenspeicher gespeichert werden,
• beim Kassiervorgang der zentrale Computer die dem Kunden-Identifikator zugeordneten Coupon-Identifikatoren überträgt,
• der Point-of-Sale-Computer unter Verwendung des Coupon-Identifikators die vollständigen Coupondaten aus dem lokalen Datenspeicher abruft.

## Beschreibung

### Technisches Gebiet

Die Erfindung betrifft ein Verfahren zur Ausgabe und zum Einlösen eines elektronischen Coupons mit folgenden Schritten:
- Erzeugen eines elektronischen Coupons durch einen zentralen Server, wobei der Coupon mindestens eine Angabe über einen gewährten Rabatt oder über ein Guthaben sowie eine oder mehrere Bedingungen enthält;
- Zuordnen des Coupons zu einem Kunden-Identifikator,
- Übertragen einer Coupon-Anfrage, welche mindestens einen Kunden-Identifikator umfasst, von einem Point-of-Sale-Computer über ein Datennetzwerk an den zentralen Server,
- Übertragen der Coupondaten vom zentralen Server über ein Datennetzwerk auf den Point-of-Sale-Computer.

### Stand der Technik

Es sind bereits Systeme zur Ausgabe und zum Einlösen von Coupons bekannt, die einen Point-of-Sale-Computer, zum Beispiel ein lokales Kassensystem, und einen zentralen Server umfassen, wobei sich der Kunde durch ein oder mehrere Identifikationsmerkmale identifiziert (z.B. durch ein Kennwort oder eine PIN), das Kassensystem diesen Kunden-Identifikator, nachfolgend kurz Kunden-ID genannt, an den zentralen Server sendet und der Server als Antwort die Daten eines oder mehrerer Coupons zurück an das Kassensystem sendet.

Derartige Systeme sind beispielsweise in den Druckschriften WO 02/071179 A2 und EP 1 968 004 A1 bekannt.

Die Einlösung und Ausgabe von Coupons sollte sehr schnell verarbeitet werden, um den Kassiervorgang nicht zu beeinträchtigen. Wartezeiten an der Kasse aufgrund von langen Transaktionszeiten bei der Couponeinlösung und -ausgabe würden ein solches Verfahren unattraktiv machen.

Mit der steigenden Akzeptanz von Mobile Couponing steigt auch die Anzahl der personalisierten Coupons, die zu einem bestimmten Kunden auf einem zentralen Server gespeichert sind und die für eine Einlösung zur Verfügung stehen.

Die Coupondaten umfassen im Gegensatz zu einfachen Rabatten mehrere Komponenten, zum Beispiel die EAN/GTIN (European Article Number / Global Trade Item Number), den Rabattwert, das Coupon-Layout inkl. Bildern für den Abdruck und den Einlöse- bzw. Ausgabebedingungen des Coupons. Die Übertragung dieser Coupondaten erst während des Kassiervorgangs verursacht ein hohes Datenvolumen und kann erhebliche Zeit in Anspruch nehmen. Hierdurch wird der Kassiervorgang verzögert, zumal die übertragenen Daten anschließend noch eingelesen und ausgewertet werden müssen.

Aufgabe der vorliegenden Erfindung ist es, die Transaktionsdauer für das Einlösen und die Ausgabe von personalisierten Coupons zu reduzieren.

Diese Aufgabe wird gemäß der Erfindung dadurch gelöst,
- dass für mehrere Coupons die vollständigen Coupondaten mit einem zugeordneten Coupon-Identifikator vor dem Kassiervorgang von dem zentralen Server auf den Point-of-Sale-Computer übertragen und von diesem in einem lokalen Datenspeicher gespeichert werden,
- dass beim Kassiervorgang der zentrale Computer die dem Kunden-Identifikator zugeordneten Coupon-Identifikatoren überträgt und
- dass der Point-of-Sale-Computer unter Verwendung des Coupon-Identifikators die vollständigen Coupondaten aus dem lokalen Datenspeicher abruft.

Mit anderen Worten besteht die Erfindung aus einem sogenannten Coupon-Caching. Dabei werden die Coupondaten zu Zeiten mit wenig oder keinem Kundenverkehr auf den Point-of-Sale-Computer (Kassensystem) übertragen und dort in Verbindung mit eindeutigen, dem jeweiligen Coupon zugeordneten Coupon-Identifikatoren (auch Coupon-IDs genannt) gespeichert. Das Kassensystem sendet das Identifikationsmerkmal des Kunden (Kunden-ID) an den zentralen Server und erhält als Antwort lediglich die Coupon-IDs zurück, die dem Kunden zugeordnet sind. Das Datenvolumen der Coupon-IDs ist erheblich viel kleiner als das Datenvolumen der Coupondaten. Die Coupondaten selbst werden dann aus der lokalen Kopie unter Verwendung der Coupon-IDs abgerufen und stehen für die weitere Verarbeitung sofort zur Verfügung.

Das Übertragen der Coupondaten erfolgt vorzugsweise zu den Schließzeiten der Point-of-Sales, wenn die Point-of-Sale-Computer oder Kassensysteme nicht für den Verkauf benötigt werden. Es ist aber auch möglich, während der Ladenöffnungszeiten einen Kommunikationscomputer in den jeweiligen Verkaufsstätten (Point-of-Sales) zu betreiben, der von dem Abrechnungsvorgang unabhängig die Coupondaten abruft und auf einem lokalen Datenspeicher speichert. Der Kommunikationscomputer wird nicht zur Abwicklung von Kassiervorgängen verwendet und ist über ein lokales Datennetzwerk (LAN) mit dem Kassensystem verbunden. Das Kassensystem muss folglich nicht über ein Weitverkehrnetz (WAN), wie das Internet, die Coupondaten abrufen sondern kann diese über das LAN vom Kommunikationscomputer abrufen. Bei üblichen Datenübertragungsraten von 1 bis 6 MBit/s für WANs und 100 bis 1000 MBit/s für LANs ergibt sich hieraus eine erhebliche Beschleunigung. Eine weitere Beschleunigung ergibt sich, wenn die Coupondaten lokal auf einer Festplatte des Kassensystems selbst abgespeichert sind. Daten auf modernen Festplatten werden über Datenbusse nach dem SATA-Standard Daten mit weit über 1000 MBit/s zum Prozessor des Kassensystems übertragen.

In der Praxis kann der zentrale Computer nach der Übertragung des Kunden-Identifikators eine Gültigkeitsprüfung für die dem Kunden-Identifikator zugeordneten Coupons durchführen und nur die Coupon-Identifikatoren an den Point-of-Sale-Computer übertragen, die gültigen Coupons zugeordnet sind. Durch diesen Schritt wird die Gültigkeitsüberprüfung für die einzelnen Coupons nicht durch die Point-of-Sale-Computer durchgeführt sondern durch den zentralen Server.

Der zentrale Server führt folglich eine Vorab-Prüfung (Coupon-Preselection) aller dem Kunden zugeordneten Coupons durch und übermittelt nur jene Coupon-IDs, die aufgrund ihrer Eingabe- bzw. Ausgabebedingungen überhaupt gültig sein können. Coupon-IDs von Coupons, die kurz vorher von dem Kunden eingesetzt wurden und daher nicht mehr zur Verfügung stehen, werden nicht übermittelt. Das Prüfen der Gültigkeit der Coupons durch den zentralen Server reduziert die Menge der übertragenen Daten, weil die IDs ungültiger Coupons nicht übertragen werden. Außerdem wird die Gültigkeitsüberprüfung durch den zentralen Server durchgeführt, der nicht mit der Durchführung des Kassiervorgangs belastet ist. Der zentrale Server kann ein leistungsfähiger Computer mit einem schnellen Prozessor sein, der die Überprüfung sehr viel schneller durchführen kann, als beispielsweise der Prozessor eines herkömmlichen Kassensystems.

Neben der einfachen Prüfung, ob der Coupon in der Vergangenheit eingelöst wurde, können auch in den Coupondaten definierte Gültigkeitsvoraussetzungen geprüft werden. So können die Coupondaten Bedingungen umfassen, die von Artikel-ungebundenen Informationen abhängen, wie z.B. einen Gültigkeitszeitraum (Aktionszeitraum) des Coupons, die Anzahl der vom Kunden bereits eingelösten Coupons, die Beschränkung der Einlösbarkeit des Coupons bei einen bestimmten Händler oder eine bestimmte Filiale (Point of Sale), das geographische Aktionsgebiet des Coupons oder eine Mindest-Bonsumme, ab der der Coupon einsetzbar ist. Bei der Gültigkeitsprüfung können dann die Ist-Daten mit den entsprechenden Bedingungen der Coupondaten verglichen werden. Die Artikel-ungebundenen Informationen sind in der Regel in der Datenbank des Servers gespeichert oder können durch Abfrage der internen Uhr des Servers oder durch Analyse der Identifikation des Point-of-Sales, welche mit der Anfrage übermittelt wird, ermittelt werden.

Ferner können die Coupondaten eine oder mehrere Bedingungen enthalten, die von Artikel-gebundenen Informationen abhängig sind und Gültigkeitsmerkmale des Coupons bilden. Beispiele für Artikel-gebundene Informationen sind zum Beispiel
- Artikelanzahl,
- Artikeleinzelpreis,
- Artikelgesamtpreis,
- Anzahl der Artikel einer Warengruppe,
- Gesamtpreis aller Artikel einer Warengruppe.

Die Ist-Artikeldaten können mit den Bedingungen der Coupondaten verglichen werden, um die Gültigkeit des Coupons zu ermitteln. Hierzu kann der Point-of-Sale-Computer zusammen mit der Coupon-Anfrage die vom Kassensystem erfassten Ist-Artikeldaten an den zentralen Computer übertragen. Der zentrale Computer vergleicht dann bei der Gültigkeitsprüfung die Ist-Artikeldaten mit den Bedingungen der Coupondaten und gibt die Coupon-ID nur an den Point-of-Sale-Computer weiter, wenn die Bedingungen erfüllt sind.

Alternativ kann die Prüfung der Artikel-gebundenen Informationen auf dem Point-of-Sale-Computer erfolgen. Der zentrale Server kann die Artikel-ungebundenen Bedingungen prüfen und dann die gemäß dieser ersten Prüfung gültigen Coupon-IDs auf den Point-of-Sale-Computer übertragen. Dieser kann dann die Artikel-gebundenen Bedingungen prüfen und aus den übertragenen Coupons nur diejenigen auswählen, die auch diese Artikel-gebundenen Bedingungen erfüllen.

Die Zuordnung der Coupons zu einem Kunden kann auf dem zentralen Server stattfinden und gespeichert werden. So kann gewährleistet werden, dass die aktuellsten Entwicklungen (z.B. Einlösung des Coupons in einem anderen Geschäft oder Ausstellung eines neuen Coupons durch ein anderes Geschäft) jederzeit berücksichtigt werden. Die Zuordnung kann daher nicht während der Ladenschlusszeiten auf die Kassensysteme übertragen werden.

Es ist aber auch möglich, im Notfall die Gültigkeitsüberprüfung anhand der zwischengespeicherten Coupondaten im Point-of-Sale-Computer durchzuführen. Auf diese Alternative kann insbesondere zurückgegriffen werden, wenn die Datenkommunikation zu dem zentralen Server gestört ist oder wenn der zentrale Server überlastet ist. Zu diesem Zweck kann eine Datei nächtlich auf das Kassensystem bzw. einen damit vernetzten lokalen Computer übermittelt werden, welche die Kunden-IDs aller Kunden enthält, die sich überhaupt für das Couponing freigeschaltet haben. Dadurch kann - gerade in der Anfangsphase - die Kommunikation mit dem Server komplett eingespart oder erheblich reduziert werden, wenn nur relativ wenige Kunden das Verfahren nutzen.

Aufgrund der Gültigkeitsüberprüfung wird dann eine vorläufige Gutschrift für den Kunden erstellt. Der Kunde kann beispielsweise auf seinem Kassenbon darauf hingewiesen werden, dass die Gültigkeit der Coupons wegen Problemen beim Datenverkehr zur Zeit nicht überprüft werden kann. Ihm kann entweder ein Gutschein in Höhe der Rabatte der gültigen Coupons nach Überprüfung der Gültigkeit in Aussicht gestellt werden oder eine Rückerstattung der Rabatte auf sein Konto oder seine Kreditkarte angekündigt werden.

Bei dem Arbeitsschritt des Übermittelns einer Coupon-ID in Verbindung mit einer bestimmten Kunden-ID von dem zentralen Server an einen Point-of-Sale-Computer kann diese Coupon-ID für diese Kunden-ID in der Datenbank des zentralen Servers gesperrt werden. Dies geschieht innerhalb des gleichen Programmabschnitts des auf dem zentralen Server ablaufenden Computerprogramms und insbesondere bevor eine zweite Abfrage von bestimmten Kunden zugeordneten Coupon-IDs durch den zentralen Server bearbeitet werden kann. Auf diese Weise wird verhindert, dass ein Coupon durch den gleichen Kunden zweimal eingelöst wird. Dies ist insbesondere dann von Bedeutung, wenn die Gültigkeitsüberprüfung anhand der zwischengespeicherten Coupondaten im Point-of-Sale-Computer durchgeführt wird. Dabei kann es vorkommen, dass zwei Point-of-Sale-Computer zeitlich unmittelbar hintereinander die Coupons des gleichen Kunden abfragen. Da bereits bei der Abarbeitung der Programmfunktion, welche die Übermittlung einer Coupon-ID zu einer bestimmten Kunden-ID durchführt, diese Coupon-ID gesperrt wird, wird bei der nachfolgenden Anfrage in Bezug auf Coupons für diesen Kunden diese Coupon-ID nicht ein zweites Mal übermittelt, selbst wenn die zwei Anfragen unmittelbar hintereinander erfolgen.

Nach Abschluss des Kassiervorgangs für den betreffenden Kunden kann der Point-of-Sale-Computer eine Liste der beim Bezahlen berücksichtigten Coupon-IDs erstellen und an den zentralen Server übermitteln. Der zentrale Server markiert die Coupons, die den in der Liste übermittelten Coupon-IDs in Verbindung mit der Kunden-ID zugeordnet sind, als eingelöst oder gelöscht. Alle weiteren Coupons, deren ID der zentrale Server an den Point-of-Sale-Computer übermittelt hat, wurden bei diesem Kassiervorgang nicht berücksichtigt. Die Sperrung dieser weiteren Coupons wird folglich aufgehoben.

Mit der Rückübermittlung der Coupon-IDs an den zentralen Server können weitere für die Einlösung des Coupons relevante Daten übermittelt werden, z.B. im Falle eines variablen Coupons (Rabatt hängt von der Höhe des Bon-Betrages ab) der gewährte Rabatt sowie ggf. Informationen über die Einlösebedingungen ("Zwei für den Preis von einem", "Kaufe zwei, erhalte eins umsonst" etc.). Diese Daten werden von dem zentralen Server für die Buchhaltung und die Abrechnung gegenüber den Unternehmen benötigt, die den Coupon ausgeben haben. Dies sind meist Hersteller oder Händler, wobei der Betreiber des Couponing-Systems ein separater Dienstleister sein kann.

Diejenigen Coupons, die von dem zentralen Server an den Point-of-Sale-Computer übermittelt wurden, deren Coupon-ID aber nicht durch den Point-of-Sale-Computer an den zentralen Server rückübermittelt wurden, sind bei dem Kassiervorgang nicht berücksichtigt worden. Ihre Sperre kann aufgehoben werden, damit sie für spätere Einkäufe des gleichen Kunden wieder zur Verfügung stehen.

Das erfindungsgemäße Verfahren eignet sich auch hervorragend für das sogenannte "Checkout-Couponing", bei dem einem Kunden nach Tätigung eines Kaufs ein bestimmter Rabatt eingeräumt wird. Der Point-of-Sale-Computer, insbesondere das Kassensystem, kann nach Abschluss des Kassiervorgangs für den betreffenden Kunden einen Checkout-Coupon erstellen und an den zentralen Server übermitteln. Hierzu muss der Point-of-Sale-Computer nicht die gesamten Coupondaten an den zentralen Server senden. Es reicht aus, wenn der Point-of-Sale-Computer allein den dem Coupon zugeordneten Coupon-Identifikator und den dem Kunden zugeordneten Kunden-Indentifikator übermittelt. Nach Empfang dieses Checkout-Coupons durch den zentralen Server steht dem Kunden auch dieser Coupon an jedem mit dem zentralen Server verbundenen Point-of-Sale zur Verfügung. Auch bei dem Checkout-Couponing wird mit stark reduziertem Datenaufkommen die vollständige Couponinformation zwischen Server und Point-of-Sale-Computer ausgetauscht, da nur die IDs übermittelt werden und auf dem zentralen Server dann dem vollständigen Kundenprofil und den vollständigen Coupondaten zugeordnet wird. Der Kunde kann dabei zusätzlich per SMS/MMS/E-Mail über den neuen Coupon informiert werden.

### Kurze Beschreibung der Zeichnungen

Ausführungsformen der Erfindung werden nachfolgend unter Bezugnahme auf die beigefügten Zeichnungen beschrieben.
Fig. 1 zeigt schematisch eine Anordnung für die Durchführung des erfindungsgemäßen Verfahrens.
Fig. 2 zeigt den Ablauf eines Bezahlvorgangs an einem Point-of-Sale unter Einbindung des erfindungsgemäßen Couponingverfahrens.
Fig. 3 zeigt ein Flussdiagramm eines selektiven Prüfvorgangs, entweder auf dem zentralen Server oder auf dem Point-of-Sale-Computer.
Fig. 4 zeigt die Struktur eines Systems mit Proxy Servern (es kann sich auch um eine Kaskade von Proxy Servern handeln), die ein Offline-Couponing auch bei unterbrochener Internetverbindung ermöglicht.

### Ausführungsformen der Erfindung

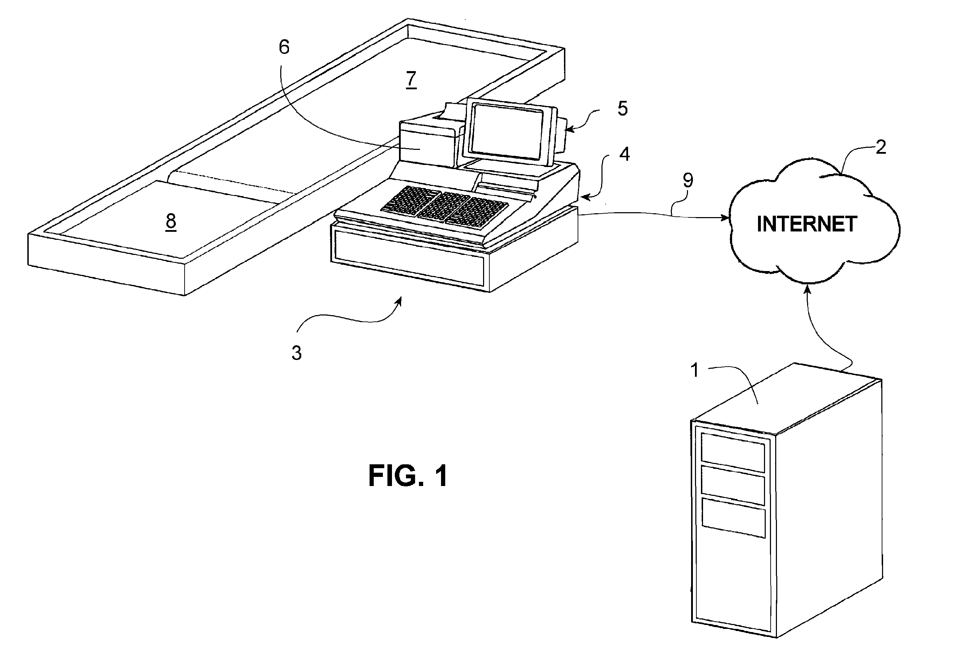

In Fig. 1 sind die Komponenten des Systems dargestellt, auf dem das erfindungsgemäße Verfahren durchgeführt wird. Es besteht aus einem zentralen Server 1, der einen leistungsfähigen Prozessor und einen großen Datenspeicher, beispielsweise eine Festplatte mit mehreren hundert GB Speicherplatz, aufweist. Der Server 1 weist auch eine Datenschnittstelle auf, über die er Zugriff auf das Internet 2 erhält. Weitere Komponenten des zentralen Servers, wie Anschluss an das Stromnetz und Netzgerät, Tastatur und Bildschirm, sind in Fig. 1 nicht dargestellt.

Über das Internet 2 ist der zentrale Server 1 mit einem Kassensystem 3 gekoppelt. Das Kassensystem umfasst eine elektronische Registrierkasse 4 mit einem Anzeigebildschirm 5 und einem Drucker 6 für Kassenbelege und auch neu ausgestellte Coupons. Es ist in herkömmlicher Weise mit einem Laufband 7 und einer Wägeeinheit 8 in Verlängerung des Laufbands 7 gekoppelt. Über die Wägeeinheit 8 können Produkte zum Kassieren abgewogen werden. Die Registrierkasse 4 des Kassensystems 3 enthält ebenfalls einen Prozessor und einen lokalen Datenspeicher. Das Kassensystem 3 ist über eine Datenleitung 9 direkt oder indirekt mit dem Internet verbunden. Die dargestellte Ausführungsform zeigt das Kassensystem 3 eines Point-of-Sale mit nur einer Kasse. Das bildet in diesem Fall den Point-of-Sale-Computer. Selbstverständlich können mehrere Kassensysteme auf den zentralen Server 1 über das Internet zugreifen. Die Architektur des Point-of-Sale-Computers kann auch komplexer sein und zum Beispiel einen Zentralrechner umfassen, an den mehrere Kassensysteme angeschlossen sind. Der Zentralrechner kann dann als Proxy für die Kassensysteme dienen.

Bei einem Kassiervorgang wird sich der Kunde an dem Kassensystem identifizieren. Dies kann durch eine maschinenlesbare Kundenkarte oder Kreditkarte geschehen. Alternativ kann ein tragbares Datenverarbeitungsgerät, wie ein Mobiltelefon, mit der Kasse kommunizieren, um den Kunden eindeutig zu identifizieren. Auch kann der Kassierer einen dem Kunden zugeordneten Datensatz aus dem Datenspeicher des Kassensystems durch Eingabe des Namens des Kunden eingeben. Dem Kunden ist ein eindeutiger Identifikator zugeordnet. Dieser Kunden-Identifikator wird zur Durchführung des erfindungsgemäßen Verfahrens an den zentralen Server 1 übermittelt.

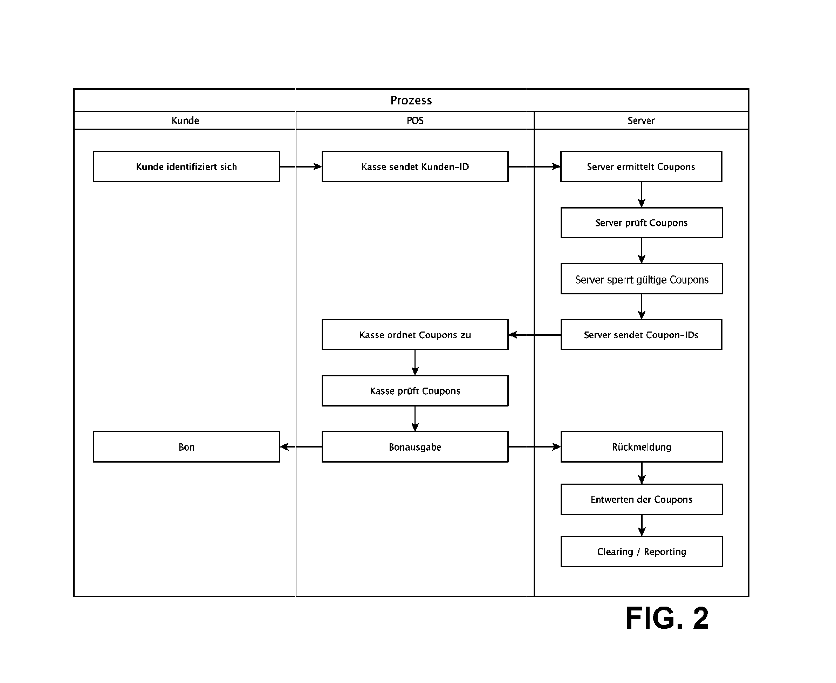

Sobald der zentrale Server 1 die Anfrage des Kassensystems 3 mit dem Identifikationsmerkmal des Kunden erhalten hat, läuft folgender Prozess (vgl. Fig. 2) ab:
1. Der Server 1 ermittelt alle in seiner Datenbank vorhandenen, dem Kunden zugeordneten Coupons und fügt diese der Antwortliste zu.
2. Der Server 1 prüft die ermittelten Coupons und streicht aus der Antwortliste alle Coupons, deren Bedingungen für eine Einlösung bzw. Ausgabe nicht erfüllt sind.
3. Der Server 1 sperrt die gültigen Coupons in seiner Datenbank für weitere Abfragen.
4. Der Server 1 übermittelt die Coupon-IDs aller auf der Antwortliste verbliebenen, gültigen Coupons an das Kassensystem 3.
5. Das Kassensystem 3 kann eine zusätzliche Couponprüfung durchführen.
6. Am Ende des Kassiervorgangs wird ein Bon erstellt, wobei alle gültigen Coupons berücksichtigt werden und zu einer Reduktion des zu zahlenden Endbetrags des Bons führen.
7. Anschließend erfolgt eine Rückmeldung des Kassensystems 3 an den zentralen Server 1, bei der die IDs und ggf. weitere Daten der verwendeten Coupons übermittelt werden.
8. Die verwendeten Coupons werden entwertet.
9. Die nicht verwendeten aber noch gesperrten Coupons werden entsperrt (Freigabe), damit sie für einen späteren Einkaufsvorgang zur Verfügung stehen.

Bei der Prüfung, ob ein Coupon überhaupt gültig sein kann oder nicht, werden
(a)Artikel-unabhängige Informationen und
(b) Artikel-gebundene Informationen
genutzt.

Artikel-unabhängige Informationen sind zum Beispiel das aktuelle Datum, die aktuelle Uhrzeit, die Anzahl bereits eingelöster oder ausgegebener Coupons innerhalb eines Zeitraums (zum Beispiel "maximal 1 Coupon pro Tag") Bonsumme oder die ID des Händlers oder die ID der Filiale. Artikel-gebundene Informationen sind zum Beispiel die Anzahl der Artikel, etc. Diese können mit der Anfrage des Kassensystems 3 an den zentralen Server 1 als Zusatzinformationen mitgeschickt werden. Dabei kann jedem Point-of-Sale-Computer bzw. jedem Kassensystem 3 ein eigener Identifikator zugeordnet werden. Es können aber auch existierende Identifikatoren verwendet werden. Die Identifizierung des Händlers und/oder der Filiale kann zum Beispiel anhand der zugeordneten IP-Adresse erfolgen; in der Regel wird jedoch die ID des Händlers bzw. der Filiale mit übermittelt.

Weitere Prüfungskriterien der Artikel-unabhängigen Prüfungen können folgende Kriterien sein:
1. Passt der Aktionszeitraum des Coupons zum heutigen Datum?
2. Passt der Aktionszeitraum des Coupons zum heutigen Wochentag?
3. Passt der Aktionszeitraum zur aktuellen Uhrzeit?
4. Hat der Kunde bereits eine bestimmte Anzahl Coupons eingelöst und hat daher sein Limit erreicht?
5. Ist der Coupon bei diesem Händler überhaupt einlösbar (anhand Händler-/Store-ID)?
6. Liegt der Standort des Händlers im Aktionsgebiet?
7. Ist der Coupon anhand der Bonsumme überhaupt gültig?

Diese Kriterien werden zur Reduzierung der zu übertragenden Datenmenge vom zentralen Server 1 geprüft.

Artikel-gebundene Prüfungskriterien können zum Beispiel folgende sein:
1. Anzahl der Artikel
2. Einzelpreis der Artikel
3. Gesamtpreis eines Artikels (Anzahl mal Einzelpreis)
4. Warengruppe des Artikels
5. Liegt eine bestimmte Kombination von Artikeln vor?
6. Liegt eine bestimmte Kombination von Warengruppen vor?
7. Gesamtpreis der Artikel einer Warengruppe

Die gesamte Coupon-Prüfung kann auf dem zentralen Server 1 durchgeführt werden, wenn dies den Kassiervorgang beschleunigt. Dies ist immer dann sinnvoll, wenn die eingesetzten Kassensysteme 3 veraltet sind oder technisch nicht leistungsstark genug sind. Kassensysteme 3 sind im allgemeinen Computersysteme, die einem hohen Sicherheitsstandard entsprechen. Sie sind vornehmlich auf Betriebssicherheit ausgelegt. Aus diesem Grund werden häufig langjährig bewährte Hardware- und Software-Komponenten eingesetzt, die meist gegenüber den leistungsfähigsten aber auch empfindlichsten Komponenten deutlich langsamer sind. Ebenfalls werden Kassensysteme 3 über eine recht lange Zeitdauer verwendet und weisen daher ein Durchschnittsalter auf, dass das Durchschnittsalter von Rechnern in Rechenzentren übersteigt. Daher wird die durchschnittliche Rechengeschwindigkeit und Leistungsfähigkeit eines Kassensystems 3 meist deutlich niedriger als die eines modernen Computers liegen, der als zentraler Server 1 eingesetzt wird. Wenn also die Leistungsfähigkeit der Point-of-Sale-Computer durchschnittlich erheblich niedriger als die des zentralen Servers 1 ist, sollte die Coupon-Prüfung grundsätzlich vom zentralen Server 1 durchgeführt werden.

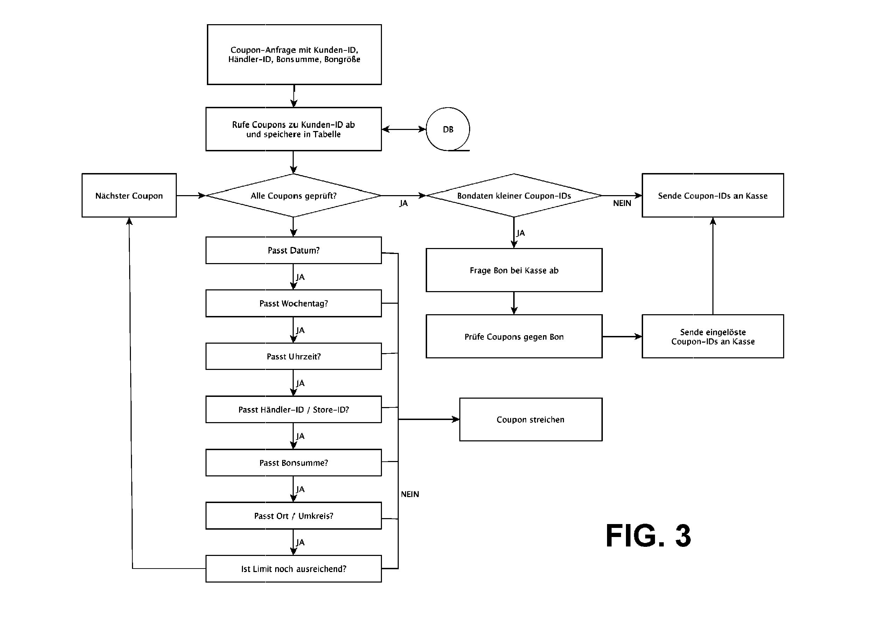

Wenn die Rechengeschwindigkeit des Point-of-Sale-Computers gleich hoch wie die des zentralen Servers 1 ist, ist die zentrale Coupon-Prüfung immer dann sinnvoll, wenn die Menge der Bondaten (von der Kasse erfasste Umsatzdaten des aktuellen Einkaufsvorgangs) kleiner ist als die Menge der bereits auf die IDs reduzierten Coupondaten. In diesem Fall kann die von Fall zu Fall ermittelt werden, ob die zentrale oder lokale Gültigkeitsprüfung vorzuziehen ist. Hierzu bietet sich folgendes Verfahren an, das in dem in Fig. 3 abgebildeten Flussdiagramm dargestellt ist:
1. Die Kasse sendet neben der Kunden-ID und der Händler/Store-ID auch einen Zahlenwert, der das Datenvolumen der Bondaten repräsentiert, an den Server 1.
2. Der Server ermittelt die der Kunden-ID zugeordneten Coupons und prüft die Gültigkeit der Coupons des Kunden gemäß der beschriebenen Artikel-unabhängigen Bedingungen.
3. Der Server 1 vergleicht das zu sendende Datenvolumen der gültigen Coupon-IDs dem Datenvolumen der Bondaten.
4. Falls das Datenvolumen der Bondaten kleiner ist, wird als Antwort ein spezieller Code (z.B. "GET BON") geschickt und das Kassensystem übermittelt die Bondaten. Die Gültigkeitsprüfung der Coupons anhand Artikel-gebundener Kriterien erfolgt dann auf dem zentralen Server 1.
5. Falls das Datenvolumen der Bondaten größer ist als das Datenvolumen der zusammengestellten Coupon-IDs, werden die Coupon-IDs an das Kassensystem 3 übermittelt, welches lokal die Gültigkeitsprüfung der Coupons anhand Artikel-gebundener Kriterien durchführt.
6. Der Vergleich nach Ziffer 3 muss nicht ein reiner kleiner/größer-Vergleich sein. Es kann ein gewisser Schwellenwert berücksichtigt werden, insbesondere wenn das durchschnittliche Kassensystem langsamer ist als der zentrale Server 1. Zum Beispiel kann als Bedingung für die Übertragung der Bondaten festgelegt werden, dass ihr Volumen mindestens "20% kleiner" als das der Coupondaten ist. Außerdem können bei dem Vergleich unterschiedliche Datenübertragungsraten für Upload und Download sowie die Latenzzeit mit berücksichtigt werden.

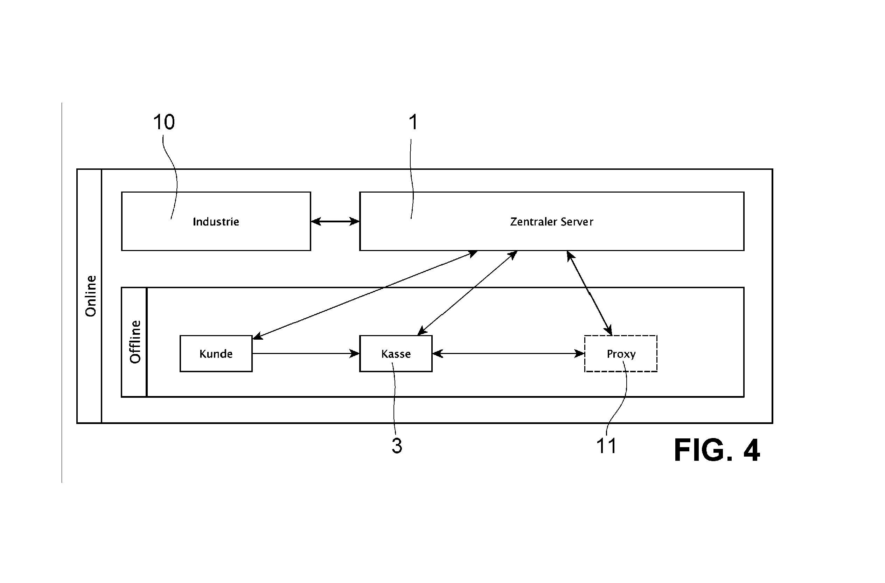

Darüber hinaus ist denkbar, dass statt einer reinen Client/Server-Kommunikation die Aufgaben des Servers 1 auch durch Proxy-Systeme durchgeführt werden, die in einem Point-of-Sale (z.B. Kaufhaus), in der Zentrale des Händlers oder in jeweils einem Land angeordnet sind. Die Daten auf den Proxy-Systemen werden ihrerseits wiederum mit den Daten auf dem zentralen Server abgeglichen (Lastverteilung, Caching). Eine derartige Struktur ist in Fig. 4 zu erkennen.

Der zentrale Server 1 wird von dem Couponing-Dienstleister betrieben und kann mit Computern 10 der Industrie über das Internet gekoppelt sein. Die Computer 10 der Industrie (Herstellerfirmen, Großhändler etc.) übertragen die Daten ihrer Coupon-Aktionen auf den zentralen Server 1. Der Server 1 kommuniziert bei dieser Ausführungsform nicht allein mit dem Kassensystem 3, sondern auch mit einem Proxy 11, der in einem Point-of-Sale (z.B. einem Kaufhaus) mehrere Kassensysteme 3 ansteuert.

Die Prüfung kann dabei sowohl in einer eigenständigen Software erfolgen, als auch über eine entsprechende Datenbankabfrage (SQL-Statement). Kombinationen aus beiden Varianten sind möglich. Wenn die Coupons als sogenannte mobile Coupons an ein mobiles Kommunikationsgerät des Kunden übertragen werden, kommuniziert der zentrale Server auch mit diesem Gerät.

Wie oben erläutert, kann nicht immer gewährleistet sein, dass eine hinreichend schnelle Online-Verbindung zur Verfügung steht. Für diesen Fall sind folgende Verfahren, auch "Offline-Fall" genannt, vorgesehen:
1. Lokale Speicherung der Kundendaten
   Anhand der Einkäufe werden die Stammfilialen der Kunden identifiziert. Alternativ kann der Kunde seine Stammfilialen selbst angeben. In diese Stammfilialen werden die Coupons des Kunden täglich repliziert (lokale Speicherung) und eventuell während des Tages durch Übermittlung geänderter Daten (Deltas) aktualisiert. Die Replikation erfolgt, wenn bzw. sobald die Filiale wieder online ist.
2. Sollte die Filiale offline sein, und die Coupondaten auch nicht im lokalen Speicher liegen, besteht die Möglichkeit, die Coupons über Bluetooth oder andere Techniken der sogenannten 'Near-Field-Communication' (NFC) vom Mobiltelefon des Kunden zur Kasse zu übertragen. Eine vorläufige Rabattgewährung erfolgt sofort, das spätere Clearing aber erst dann, wenn die Filiale wieder online ist und die Transaktion zum zentralen Server gesendet wurde.
3. Alternativ könnte, wenn keine Online-Verbindung besteht, der Bon gespeichert werden und später an den Server übertragen werden. Der Server prüft dann zeitversetzt die Einlöse- und Ausgabebedingungen. Der Rabatt wird dann beim nächsten Einkauf gutgeschrieben. Der Kunde muss zwar den vollen Preis bezahlen, profitiert aber dennoch - zeitversetzt - von seinen Coupons. Wenn der Kunde mit einer Kreditkarte oder einer Debitkarte bezahlt, kann der Betrag des Bons nach der Prüfung der Einlöse- und Ausgabebedingungen ggf. um die Höhe des Betrags der Coupons reduziert abgebucht werden oder es kann auf die gleiche Kreditkarte oder Debitkarte eine Gutschrift in Höhe des Betrags der gültigen Coupons erfolgen. Oder, wenn Bankverbindung bekannt ist, wird das Guthaben überwiesen.

Alternativ kann für die Kommunikation mit dem zentralen Server auch die (kostenpflichtige) Verbindung über das Kartenterminal hergestellt werden. Hierbei wird über eine Telefonverbindung (Modem) eine Leitung hergestellt.

Als Point-of-Sale-Computer, Kasse oder Kassensystem wird in dieser Beschreibung neben der allgemein bekannten Kasse, z.B. in Verbrauchermärkten auch die virtuelle Kasse in Online-Shops verstanden. Auch hier meldet sich der Kunde in der Regel mit einer Kunden-ID an, die für das Couponing-Verfahren verwendet werden kann.

## Patentansprüche

1. Verfahren zur Ausgabe und zum Einlösen eines elektronischen Coupons mit folgenden Schritten:
• Erzeugen eines elektronischen Coupons durch einen zentralen Server, wobei der Coupon mindestens eine Angabe über einen gewährten Rabatt oder über ein Guthaben sowie eine oder mehrere Bedingungen enthält;
• Zuordnen des Coupons zu einem Kunden-Identifikator,
• Übertragen einer Coupon-Anfrage, welche mindestens einen Kunden-Identifikator umfasst, von einem Point-of-Sale-Computer über ein Datennetzwerk an den zentralen Server,
• Übertragen der Coupondaten vom zentralen Server über ein Datennetzwerk auf den Point-of-Sale-Computer,
**dadurch gekennzeichnet, dass**
• für mehrere Coupons die vollständigen Coupondaten mit einem zuge-ordneten Coupon-Identifikator vor dem Kassiervorgang von dem zentralen Server auf den Point-of-Sale-Computer übertragen und in einem lokalen Datenspeicher gespeichert werden,
• beim Kassiervorgang der zentrale Computer die dem Kunden-Identifikator zugeordneten Coupon-Identifikatoren überträgt,
• der Point-of-Sale-Computer unter Verwendung des Coupon-Identifikators die vollständigen Coupondaten aus dem lokalen Datenspeicher abruft.

2. Verfahren nach Anspruch 1, **dadurch gekennzeichnet, dass** der zentrale Computer nach der Übertragung des Kunden-Identifikators eine Gültigkeitsprüfung für die dem Kunden-Identifikator zugeordneten Coupons durchführt und nur die Coupon-Identifikatoren an den Point-of-Sale-Computer überträgt, die gültigen Coupons zugeordnet sind.

3. Verfahren nach Anspruch 2, **dadurch gekennzeichnet, dass** der Point-of-Sale-Computer eine zusätzliche Gültigkeitsprüfung durchführt und nur die Coupons berücksichtigt, die gemäß der zusätzlichen Gültigkeitsprüfung gültig sind.

4. Verfahren nach Anspruch 2 oder 3, **dadurch gekennzeichnet, dass** die Coupondaten eine oder mehrere von Artikel-ungebundenen Informationen, insbesondere
• Aktionszeitraum des Coupons,
• Anzahl der vom Kunden bereits eingelösten Coupons,
• Einlösbarkeit des Coupons bei einem bestimmten Point of Sale,
• Aktionsgebiet des Coupons,
• Mindest-Bonsumme,
abhängige Bedingungen umfassen, die Gültigkeitsmerkmale des Coupons bilden, und dass bei der Gültigkeitsprüfung die Ist-Daten mit den Bedingungen der Coupondaten verglichen werden.

5. Verfahren nach einem der Ansprüche 2 bis 4, **dadurch gekennzeichnet, dass** die Coupondaten eine oder mehrere von Artikel-gebundenen Informationen, insbesondere
• Artikelanzahl,
• Artikeleinzelpreis,
• Artikelgesamtpreis,
• Anzahl der Artikel einer Warengruppe,
• Gesamtpreis aller Artikel einer Warengruppe,
abhängige Bedingungen umfassen, die Gültigkeitsmerkmale des Coupons bilden, und dass die Ist-Artikeldaten mit den Bedingungen der Coupondaten verglichen werden.

6. Verfahren nach Anspruch 5, **dadurch gekennzeichnet, dass** der Point-of-Sale-Computer Artikel-gebundene Informationen über das Datennetzwerk an den zentralen Computer überträgt, wobei der zentrale Computer bei der Gültigkeitsprüfung die Artikeldaten mit den Bedingungen der Coupondaten vergleicht.

7. Verfahren nach Anspruch 5, **dadurch gekennzeichnet, dass** der Point-of-Sale-Computer bei der zusätzlichen Gültigkeitsprüfung die Ist-Artikeldaten mit den Bedingungen der Coupondaten vergleicht.

8. Verfahren nach Anspruch 2 bis 7, **dadurch gekennzeichnet, dass** der Point-of-Sale-Computer eine vorläufige Gültigkeitsprüfung für die dem Kunden-Identifikator zugeordneten Coupons durchführt, eine vorläufige Gutschrift anhand der gültigen Coupons des Kunden durchführt und die endgültige Gutschrift nach Empfang der Coupon-Identifikatoren der gültigen Coupons durchführt.

9. Verfahren nach einem der vorangehenden Ansprüche, **dadurch gekennzeichnet, dass** der zentrale Server den Coupon-Identifikator in Verbindung mit einem Kunden-Identifikator sperrt, wenn der zentrale Server den Coupon-Identifikator in Verbindung mit dem Kunden-Identifikator an einen Point-of-Sale-Computer überträgt.

10. Verfahren nach Anspruch 9, **dadurch gekennzeichnet, dass** der Point-of-Sale-Computer nach Abschluss des Kassiervorgangs eine Liste der beim Bezahlen berücksichtigten Coupon-IDs erstellt, inklusive der für deren Berücksichtigung relevanten Bedingungen, und an den zentralen Server übermittelt und dass der zentrale Server die den in der Liste übermittelten Coupon-IDs in Verbindung mit der Kunden-ID zugeordneten Coupons als entwertet markiert und die anderen Coupons entsperrt.

11. Verfahren nach einem der vorangehenden Ansprüche, **dadurch gekennzeichnet, dass** der Point-of-Sale-Computer nach Abschluss des Kassiervorgangs für den betroffenen Kunden einen Coupon erstellt und an den zentralen Server übermittelt, wobei der Point-of-Sale-Computer den dem Coupon zugeordneten Coupon-Identifikator und den dem Kunden zugeordneten Kunden-Identifikator an den zentralen Server übermittelt.
